# EUROPÄISCHE PATENTANMELDUNG

(11) **EP 1 384 681 A2**
(43) Veröffentlichungstag der Anmeldung: **28.01.2004**
(21) Anmeldenummer: 03012038.0
(22) Anmeldetag: 10.03.1998
(51) Int. Cl.: B65D 75/58, B29D 23/20

(54) **Beuteltube und Verfahren zur Herstellung derselben**

(30) Priorität: 12.03.1997 CH 59197; 01.05.1997 CH 102197
(62) Teilanmeldung aus: 98905199.0
(71) Anmelder: H. Obrist & Co. AG, 4153 Reinach (CH)
(72) Erfinder: Bösch, Karl, 4202 Duggingen (CH)
(74) Vertreter: Hepp, Dieter

(57) **Zusammenfassung**

Eine Stirnwand (113) und zwei Seitenwände (111, 112) der Beuteltube sind von einem Stück Kunststoff-Folienmaterial gebildet.

Die Seitenwände (111, 112) sind längs zwei Seitenrandabschnitten (114, 115) dicht miteinander verbunden. Ein Schulterstück (117, 118) besitzt eine verschliessbare Oeffnung in der Form eines Auslassstutzens (117) und einen mit der Stirnwand (113) verbundenen, gleich wie die Stirnwand (113) gekrümmten Flansch (118).

Der Flansch (118) erstreckt sich vom Auslassstutzen (117) ausgehend längs der Stirnwand (113) bis zu je einem mittleren Bereich jeder Seitenwand (111, 112) und weist jeweils wenigstens zwei abstehende, an der Seiten wand des Folienmaterials anliegende Laschen (121,122) auf. Dadurch ist die Stirnwand (113) versteift und die Gefahr verringert, dass die Tube kippen könnte, wenn sie mit einer auf den Auslassstutzen (117) geschraubten Verschlusskappe nach unten gerichtet aufgestellt wird.

## Beschreibung

Die Erfindung bezieht sich auf eine Beuteltube mit einem Folienmaterial, das eine Stirnwand und zwei Seitenwände der Tube bildet, wobei die Seitenwände längs zwei Seitenrandabschnitten miteinander verbunden sind, und mit einem Schulterstück, das einen verschliessbaren Auslassstutzen und einen an der Stirnwand befestigten, wie die Stirnwand gekrümmten Flansch aufweist.

Es ist oft wünschbar, eine solche Beuteltube mit einer die Oeffnung des Schulterstücks verschliessenden Verschlusskappe nach unten gerichtet aufzustellen. Dabei besteht die Gefahr, dass die Tube umkippt, weil sich das Folienmaterial unter dem Gewicht des Inhalts der Tube verformt. Die Gefahr besteht insbesondere dann, wenn das Folienmaterial - in ebenfalls wünschbarer Weise - dünn, leicht und flexibel ausgebildet ist.

Eine Aufgabe der Erfindung besteht darin, eine Beuteltube der eingangs angegebenen Art so auszubilden, dass die vorstehend geschilderte Gefahr eines Umkippens, wenn die Tube wie angegeben auf den Kopf gestellt wird, verringert ist.

Die Aufgabe wird erfindungsgemäss dadurch gelöst, dass der Flansch sich vom Auslassstutzen ausgehend entlang der Stirnwand bis zu einem mittleren Bereich jeder Seitenwand nach aussen erstreckt und entlang der Stirnwand in Richtung zu den beiden Seitenrandabschnitten der Seitenwände hin erstreckt.

Vorzugsweise können zwei vom Flansch ausgehende, an den mittleren Bereichen der Seitenwände anliegende Laschen vorgesehen sein. Diese bieten zusätzlich auch einen Schutz des Folienmaterials gegen Verdrehung oder Verletzung, wenn die Tube zum Abschrauben oder Aufschrauben einer Verschlusskappe an den Seitenwänden im Bereich der Stirnwand gefasst wird. Um die Restentleerung der Tube sicherzustellen, sind diese Laschen vorteilhaft flexibel zu gestalten.

Die Erfindung betrifft auch ein Verfahren zur Herstellung eines deformierbaren Behälters, der zur Aufnahme eines pastösen Produktes bestimmt ist, nämlich ein Verfahren gemäss dem Oberbegriff des Patentanspruchs 7.

Zum Verpacken von pastösen Produkten, wie Senf, Mayonnaise, Zahnpasta, sowie cremeartigen kosmetischen und medizinischen Erzeugnissen werden heute vor allem Aluminium-, Laminatund Kunststofftuben verwendet.

Bekannte Aluminiumtuben sind im allgemeinen zylindrisch und besitzen an einem stirnseitigen Ende eine kegelförmige Stirnwand mit einem Auslass-Stutzen, der mit einem Schraubendeckel verschliesshar ist. Das Verfahren zur Herstellung von Aluminiumtuben ist arbeits- und kostenaufwendig. So werden Aluminiumtuben im Fliesspressverfahren aus einer Aluminiumrondelle vorgefertigt, auf einer ersten Lackiermaschine an der Innenseite lackiert, mittels einer Druckmaschine aussen bedruckt und auf einer zweiten Lackiermaschine aussen überlackiert. Mittels einer weiteren Vorrichtung werden dann die Verschlussdeckel auf die vorgefertigten Tuben aufgeschraubt.

Bei der Herstellung solcher bekannter Tuben werden die dem Verschlussdeckel abgewandten Enden der Tuben offen gelassen. Beim Füllen der Tuben wird das pastöse Produkt durch dieses offene Ende eingefüllt, worauf die Tube dann vollständig verschlossen wird.

Da die Tuben und die abzufüllenden pastösen Produkte üblicherweise in verschiedenen Fabrikationsbetrieben hergestellt werden, müssen die vorgefertigten leeren Tuben verpackt und vom Tubenhersteller zum Produkthersteller transportiert werden, wo sie dann mit dem entsprechenden Produkt aufgefüllt und verschlossen werden. Sowohl beim Tubenhersteller als auch beim Produkthersteller sind daher Lagerräume zur Zwischenlagerung der zur Abfüllung bereiten leeren Tuben nötig. Die Zwischenlagerung sowie auch der Transport vom Tubenhersteller zur Abfüllanlage des Produktherstellers benachteiligt die Wirtschaftlichkeit der Tubenherstellung beträchtlich. Dazu kommt, dass beim Lagern und Transportieren der leeren und stirnseitig offenen Tuben nicht verhindert werden kann, dass Verunreinigungen in die leeren Tuben gelangen, was dann in vielen Fällen das Vorschalten zusätzlicher Reinigungs- und Sterilisationsvorgänge im Produktionsbetrieb des Produktherstellers notwendig macht.

In ganz ähnlicher Art werden die bereits bekannten Kunststofftuben hergestellt. Hierbei werden Schlauchrohlinge hergestellt, welche in Nachfolgemaschinen bedruckt, lackiert und anschliessend mit einem Verschlusskörper versehen werden. Auch diese Tuben sind ebenfalls einseitig offenen und werden sowohl beim Tubenhersteller als auch beim Produkthersteller zwischengelagert.

Aus der europäischen Patentschrift 0'041'924 ist ein flexibler Behälter bekannt, welcher in einem kontinuierlichen Verfahren hergestellt und abgefüllt, also in nur einem Werk verkaufsbereit fertigerstellt werden kann. Dieser bekannte tubenartige Behälter weist einen aus einer einstückigen Folie hergestellten Tubenkörper auf, der an seiner gefalteten Stirnseite mit einem Auslass versehen ist und zwei Wände besitzt, die einen im wesentlichen rechteckigen Umriss haben, miteinander an drei Seiten verschweisst sind und sich auf verschiedenen Seiten einer durch die Tubenlängsachse verlaufenden Symmetrie-Ebene befinden.

Bei einem Verfahren, das sowohl die Herstellung des Behälters als auch den Abfüllvorgang zum Gegenstand hat, ist insbesondere die Abfüllung der Behälter für die Gesamtproduktion taktbestimmend. So schnell wie das Produkt abgefüllt werden kann, so schnell müssen die Behälter hergestellt werden. So müssen insbesondere die Verfahrensschritte Schweissen, Zuschneiden, Auslass-Stutzen einschweissen und Verschlussdeckel aufsetzen in gleicher Taktzahl erfolgen, wie das Abfüllen der vorgefertigten Behälter. Schwierigkeiten in der Einhaltung der Verfahrensparameter bzw. Verzögerungen in der Taktfrequenz treten dann auf, wenn der Auslass-Stutzen aus verfahrenstechnischen Gründen nur von einer Seite her verschweisst werden kann, so wie das etwa bei dem aus der EPB 0 041 924 bekannten Verfahren der Fall ist. So wird in diesem Verfahren der Auslass-Stutzen von der Innenseite in eine Öffnung des vorgefertigten Tubenkörpers eingesetzt und von der Aussenseite her mit der Folie verschweisst. Dieser Schweissvorgang verzögert dabei die Abfüll-Leistung und hat zur Folge, dass die Herstell- und Abfüllkapazität reduziert wird.

Die Erfindung hat sich nun die weitere Aufgabe gestellt, ein neues Verfahren zur Herstellung eines deformierbaren Behälters zu schaffen, das nicht nur die Herstellung des Behälters, sondern auch die gleichzeitige Abfüllung von fortlaufend bereitgestellten Behältern ermöglicht und die Nachteile der vorstehend beschriebenen Herstellungsverfahren nicht aufweist.

Diese Aufgabe wird ausgehend von der europäischen Patentschrift 0'041'924 durch die Merkmale des Patentanspruchs 7 gelöst.

Die Erfindung betrifft ferner einen neuartigen deformierbaren Behälter, herstellbar nach dem Verfahren des Patentanspruchs 7, nämlich einen Behälter mit den Merkmalen des Anspruchs 14.

Vorteilhafte Ausführungsformen des Verfahrens und des Behälters sind Gegenstand der abhängigen Ansprüche 8 bis 13 bzw. 15 und 16.

Das neuartige, erfindungsgemässe Verfahren zeichnet sich im wesentlichen dadurch aus, dass in nur einem Arbeitsprozess aus hochwertigem Folienmaterial ein Behälter geformt, mit einem pastösen Produkt aufgefüllt, verschlossen und anschliessend verpackt werden kann.

Das erfindungsgemässe Verfahren hat grosse Vorteile. Es ist kostengünstig, einfach in der Logistik und Produktbereitstellung sowie in jedem Abfüllbetrieb bedenkenlos einsetzbar. Die Herstellungskosten sind zudem verhältnismässig gering, da die Behälter in einfachen Schritten geformt und als solche nicht vorgefertigt und zwischengelagert werden müssen. Die Behälter können also direkt im Betrieb des Produktherstellers oder bei Lohnabfüllern hergestellt werden.

Die durch das erfindungsgemässe Verfahren herstellbaren Behälter bestehen aus einem flexiblen, einschichtigen Folienmaterial oder aber aus einem ebenfalls flexiblen, mehrschichtigen Verbundmaterial aus Kunststoff, Aluminium und/oder Papier. So kann es sich dabei zum Beispiel um ein dreischichtiges, folienartiges Verbundmaterial bestehend aus Polyester, Aluminium und Polypropylen oder Polyester, Aluminium und Polyethylen handeln, wobei dann der Polyester die Aussenschicht, das Aluminium die Mittelschicht und das Polypropylen bzw. das Polyethylen die Innenschicht des Behälters bildet.

Der Erfindungsgegenstand wird nun anhand von in der Zeichnung dargestellten Ausführungsbeispielen näher beschrieben. In der Zeichnung zeigen:
Figur 1 eine Draufsicht auf die Breitseite eines deformierbaren Behälters mit aufgesetztem Verschlusskörper,
Figur 2 eine Draufsicht auf das auslasseitige Ende des Behälters in Pfeilrichtung II der Figur 1,
Figur 3 eine Draufsicht auf einen Folienzuschnitt bestehend aus übereinanderliegenden Folienteilen,
Figur 4 eine vergrösserte Ansicht des Ausschnittes IV der Figur 3,
Figur 5 einen Schnitt durch den in der Figur 1 gezeichneten Verschlussdeckel in vergrössertem Massstab,
Figur 6 einen Schnitt durch den zur Aufnahme des Verschlussdeckels bestimmten Auslass-Stutzen,
Figur 7 eine Schnitt durch den aus Verschlussdeckel und Auslass-Stutzen gebildeten Verschlusskörper,
Figur 8 einen Schnitt entlang der Linie VIII der Figur 3 mit einem in Längsrichtung eingeführten und zur Aufnahme des Verschlusskörpers bestimmten Befestigungs-Stutzen,
Figur 9 den Stutzen der Figur 8 in eingesetztem Zustand,
Figur 10 einen Schnitt durch den aus Verschlusskörper und Befestigungs-Stutzen gebildeten Verschluss des in der Figur 1 dargestellten Behälters,
Fig. 11 eine Seitenansicht einer Beuteltube,
Fig. 12 einen Schnitt nach der Linie 12-12 in Fig. 11,
Fig. 13 in grösserem Massstab eine Draufsicht auf die Beuteltube von Fig. 11 und 12,
Fig. 14 ein Schulterstück der Beuteltube im Schnitt nach der Linie 14-14 in Fig. 13 und
Fig. 15 das Schulterstück im Schnitt nach der Linie 15-15 in Fig. 13.

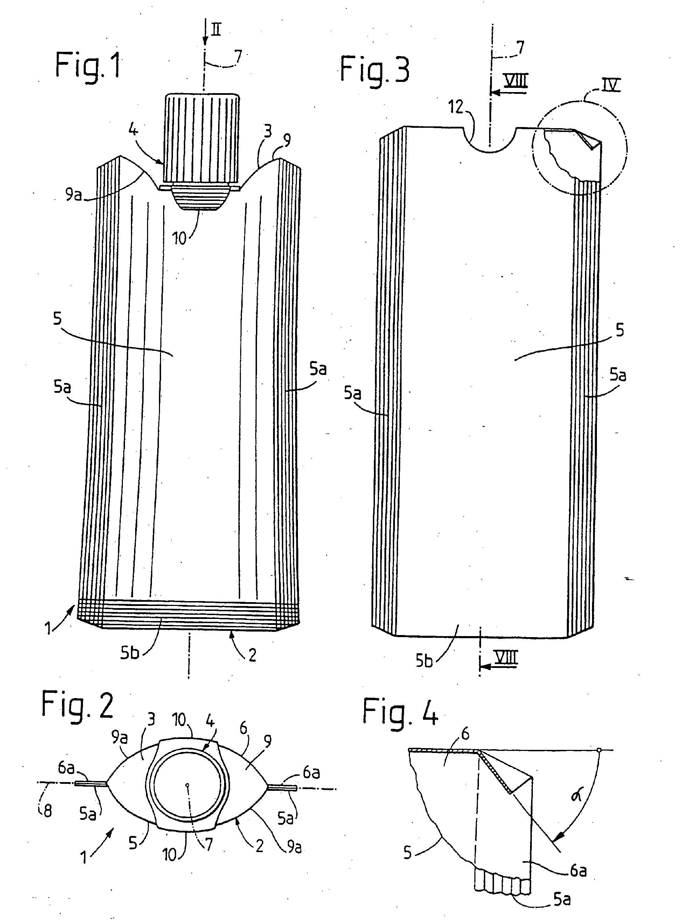

Der in den Figuren 1 und 2 dargestellte und als ganzes mit 1 bezeichnete, deformierbare Behälter weist einen Schlauchkörper 2 mit einer Stirnseite 3 auf, welche ihrerseits mit einer durch einen Verschlusskörper 4 verschliessbaren - nachfolgend noch näher beschriebenen - Auslassöffnung versehen ist.

Der Schlauchkörper 2 besitzt seinerseits zwei Wände 5 und 6, die einen im wesentlichen rechteckigen Umriss haben, sich auf verschiedenen Seiten einer durch die Längsachse 7 verlaufenden Ebene 8 befinden und bezüglich dieser Ebene 8 spiegelsymmetrisch zueinander sind. Die beiden Wände 5 und 6 weisen auf einander abgewandten Seiten je einen streifenförmigen Randabschnitt 5a bzw. 6a und an ihrem dem Auslass abgewandten Ende je einen ebenfalls streifenförmigen Querabschnitt auf (von welchen nur der Abschnitt 5b der Wand 5 sichtbar gezeichnet ist). Die Randabschnitte der beiden Wände 5 und 6 liegen paarweise aneinander an und sind miteinander verschweisst. Wie noch näher erläutert wird, bestehen die beiden Wände 5 und 6 zusammen mit einem sie verbindenden Mittelabschnitt 9 aus einem einstückigen, folienartigen Verbundmaterial bestehend aus drei miteinander verbundenen Schichten aus Polyester, Aluminium und Polypropylen.

Die die Auslassöffnung aufweisende Stirnseite 3 des Schlauchkörpers 2 wird im wesentlichen durch den erwähnten Mittelabschnitt 9 gebildet. Auf diesem ist ein nachfolgend noch näher bezeichneter Auslass-Stutzen aus Kunststoff angeordnet, der als Teil des Verschlusskörpers 4 unter anderem zum Schutz der Stirnkanten 9a mit die Wände 5 und 6 überdeckenden Schutzlaschen 10 und zur Verstärkung der Stirnseite 3 mit seitlichen Schulterstützen 11 versehen ist.

Der Mittelabschnitt 9 hat in dem in der Figur 2 dargestellten parallel zur Achse 7 projizierten Riss im wesentlichen die Form einer konvexen Linse, wobei die spitzwinkligen Ecken der im Stirnbereich 3 auslaufenden Seitenränder 5a und 6a flügelartig über die in der Figur 3 gezeichnete und im Mittelabschnitt 9 vorgesehene Auslassöffnung 12 des Behälters 1 vorstehen. In der in der Figur 1 dargestellten Ansicht ist also der Mittelabschnitt 9 eingebuchtet und hängt beidseits der Symmetrie-Ebene 8 über die Stirnkante 9a mit je einer der beiden Wände 5 bzw. 6 zusammen. In den Bereichen der Ränder 5a und 6a vereinigen sich die beiden Stirnkanten 9a zu einer einzigen in der Symmetrie-Ebene 8 liegenden Falt-Kante.

Zur Herstellung des in den Figuren 1 und 2 dargestellten Behälters wird in einem ersten Verfahrensschritt ein Folienoder Verbundstoffwerkstück, dessen Breite doppelt so lang ist wie die Länge des Schlauchkörpers 2, über einen Keil gezogen und entlang der Werkstücklängsachse in zwei gleiche Hälften gefaltet, aus welchen dann die beiden Wände 5 und 6 des Schlauchkörpers 2 gebildet werden. Das Folien- oder Verbundstoffwerkstück kann hierbei zum Beispiel von einer Band-Rolle abgewickelt werden, wobei dann - wie nachfolgend noch erläutert wird - erst in einer bereits fortgeschrittenen Verfahrensphase vorgefertigte Schlauchkörper vom Bandmaterial bzw. vom Folien- oder Verbundstoffwerkstück abgetrennt werden.

In einem zweiten Verfahrensschritt wird das gefaltete und vorzugsweise von einer Band-Rolle abgewikelte Folien- oder Verbundstoffwerkstück in zur Herstellung einzelner Behälter bestimmte Folienabschnitte aufgeteilt. Hierzu wird das Werkstückband mittels einer Transportvorrichtung schrittweise um jeweils eine Breite des zu bildenden Schlauchkörpers 2 weitertransportiert, die durch den Falt gebildete Längskante des doppellagigen Werkstücks in konstanten Abständen quer zur Transportrichtung angeschnitten und zwischen jeweils zwei solcher Einschnitte je eine Auslassöffnung 12 ausgestanzt. Anschliessend werden die durch die Einschnitte gebildeten stirnseitigen Ecken der herzustellenden Behälter nach innen umgefalzt, die beiden aneinander anliegenden Hälften des durch das Anschneiden vorbereiteten Folienabschnittes quer zur Längsrichtung verschweisst und der so gebildete Schlauchkörper 2 mittels eines Schneidwerkzeugs vom übrigen Teil des Bandes getrennt, so dass ein Folienzuschnitt der in der Figur 3 dargestellten Form entsteht.

Das Falzen der beiden stirnseitigen Ecken um den 5° bis 90°, beispielsweise 45°, betragenden Winkel α (Fig. 4), hat nicht nur eine Verstärkung der Behälterberandung in diesem Bereich zur Folge. Durch die Bildung der Falze werden darüber hinaus scharfkantige Ecken vermieden, welche einen Benutzer bei unachtsamer Handhabung verletzen oder die zur Aufnahme der Behälter 1 dienenden Tragtaschen beschädigen können.

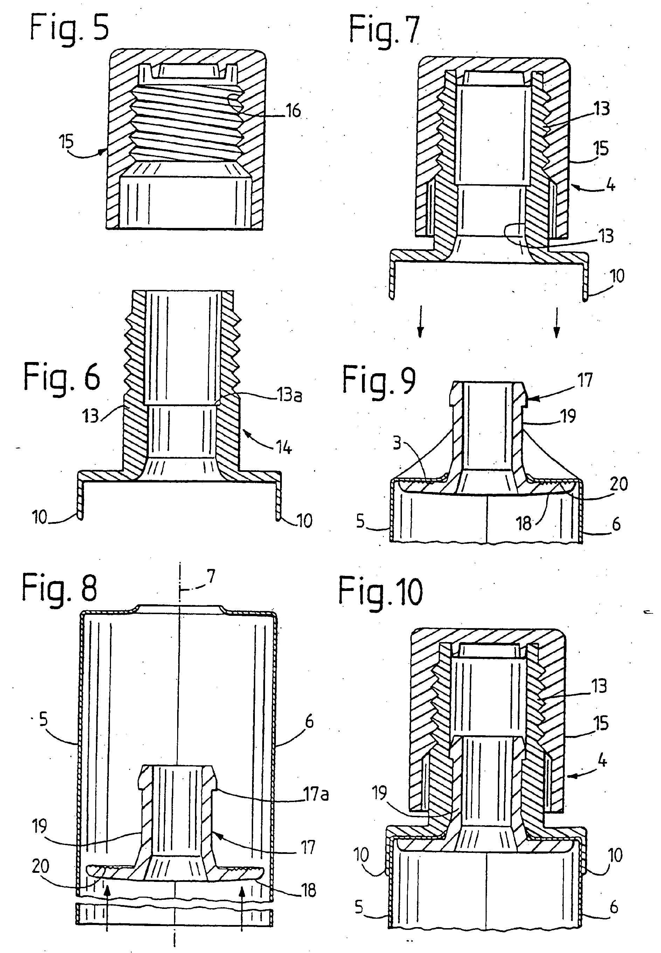

In einem weiteren Verfahrensschritt, der zum Beispiel parallel zum vorstehend beschriebenen zweiten Verfahrensschritt abläuft, wird der in der Figur 7 dargestellte Verschlusskörper 4 bereitgestellt. Dieser besteht im hier vorliegenden Fall aus dem bereits vorstehend genannten Auslass-Stutzen 14 (Fig. 6) und einem Verschlussdeckel 15 (Figur 5), wobei letzterer mit seinem Innengewinde 16 auf dem Gewindeteil 13 des Auslass-Stutzens 14 aufgeschraubt ist. Wie man insbesondere aus der Figur 6 ersehen kann, ist der Auslass-Stutzen 14 noch mit den bereits vorstehend genannten Schutzlaschen 10 und Schulterstützen 11 versehen und so dimensioniert und mit dem eine ebene Stirnfläche aufweisenden Verschlussdeckel 15 verschliessbar, dass der herzustellende Behälter eine genügend hohe Standfestigkeit besitzt und als Stehbehälter aufgestellt werden kann.

Im Anschluss an die vorstehenden Verfahrensschritte wird ein Befestigungs-Stutzen 17 in Pfeilrichtung durch den in der Figur 8 gezeichneten und bereits aufgefalteten Zuschnitt des Schlauchkörpers 2 geführt und am stirnseitigen Ende des Schlauchkörpers, also am Mittelabschnitt 9 angeschweisst, aufgeklebt und/oder aufgepresst, wozu der Befestigungs-Stutzen 17 insbesondere mit einem ringförmigen Kragen 18 versehen ist, der mit dem Mittelabschnitt 9 die gewünschte Verbindung eingeht. Wie man aus der Figur 9 ersehen kann, durchdringt der zur Aufnahme des Verschlusskörpers 4 bestimmte Hals 19 des Befestigungs-Stutzens 17 im befestigten Zustand die Auslassöffnung 12 des Schlauchkörper-Zuschnittes und ragt aus diesem heraus. Zur optimalen Verbindung von BefestigungsStutzen 17 und Mittelabschnitt 9 kann der Kragen 18 noch zusätzlich mit ringförmig angeordneten, spitzartig zulaufenden Rippen 20 versehen sein.

Nach dem Aufpressen des Verschlusskörpers 4 auf dem Befestigungs-Stutzen 17, durch welches insbesondere das den Mittelabschnitt 9 bildende Folienstück zwischen dem Befestigungs-Stutzen 17 und dem Auslass-Stutzen 14 eingespannt wird, wird das pastöse Produkt durch die der Stirnseite 3 gegenüberliegende, im Produktionsablauf vorzugsweise nach oben gekehrte Öffnung des genannten Zuschnittes in den Schlauchkörper 2 eingefüllt. Anschliessend wird die noch verbleibende Öffnung des Schlauchkörpers 2 verschlossen und verschweisst, und der so fertigerstellte und aufgefüllte Behälter direkt an ein zur Endverpackung bestimmtes Packband weitergeleitet.

Zur Entnahme des Produktes aus dem erfindungsgemässen Behälter 1 wird der Verschlussdeckel 15 entfernt und dann der Schlauchkörper 2, vom breitseitigen Ende her beginnend, zusammengedrückt. Das den Schlauchkörper 2 bildende Material ist vorzugsweise derart elastisch und insbesondere plastisch deformierbar, dass dieser nach dem Herausdrücken eines Teiles des Produktes seine zusammengedrückte Form durch den sogenannten "Rückstell-Effekt" im wesentlichen beibehält und keine Luft durch den Auslass Stutzen 14 einsaugt.

Abschliessend sei noch darauf hingewiesen, dass die durch das vorstehend beschriebene Verfahren herstellbaren Behälter verschiedenartig ausgebildet sein und sich daher vom gezeichneten Ausführungsbeispiel unterscheiden können. So kann der Behälter anstelle einer rechteckigen auch eine andere Umrissform haben. Auch können die Abmessungen und Proportionen der Behälter in weiten Grenzen variieren. Schliesslich können auch noch die Verschlussdeckel verschiedenartig geformt und zum Beispiel die Form einer Kugel oder eines Polyeders haben.

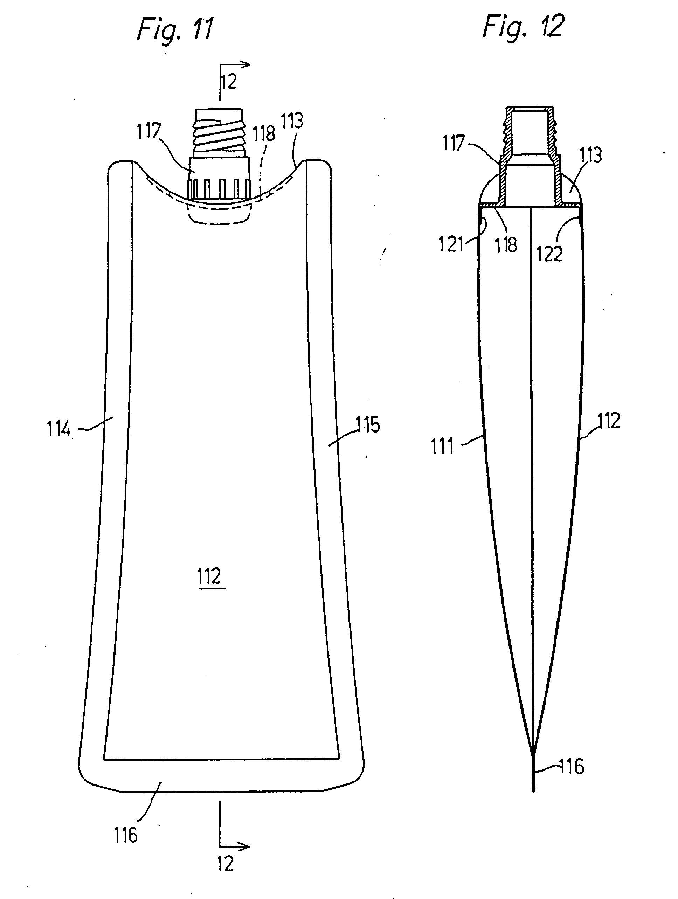

Die in den Fig. 11 bis 13 dargestellte Beuteltube besitzt zwei Seitenwände 111 und 112 und eine Stirnwand 113, die alle von einem Stück Folienmaterial gebildet sind. Das Folienmaterial ist vorzugsweise dünn, leicht und flexibel. Es kann eine einfache Kunststoffolie oder auch ein Laminat sein. Wenigstens die dem Inneren der Tube zugekehrte Seite des Folienmaterials kann aus schweissbarem Kunststoff bestehen. Die beiden Seitenwände 111 und 112 sind längs zwei Seitenrandabschnitten 114 und 115 und längs eines Endrandabschnittes 116 dicht miteinander verbunden, insbesondere verschweisst.

An der Stirnwand 113 ist ein Schulterstück befestigt, das eine verschliessbare Oeffnung in der Form eines Auslassstutzens 117 besitzt. Das Schulterstück besteht vorzugsweise aus einem schweissbaren Kunststoff. Von dem Auslassstutzen 117 geht ein Flansch 118 aus, der gleich wie die Stirnwand 113 gekrümmt ist. Der Flansch 118 liegt innen an der Stirnwand 113 an und ist daran dicht abschliessend befestigt, vorzugsweise festgeschweisst.

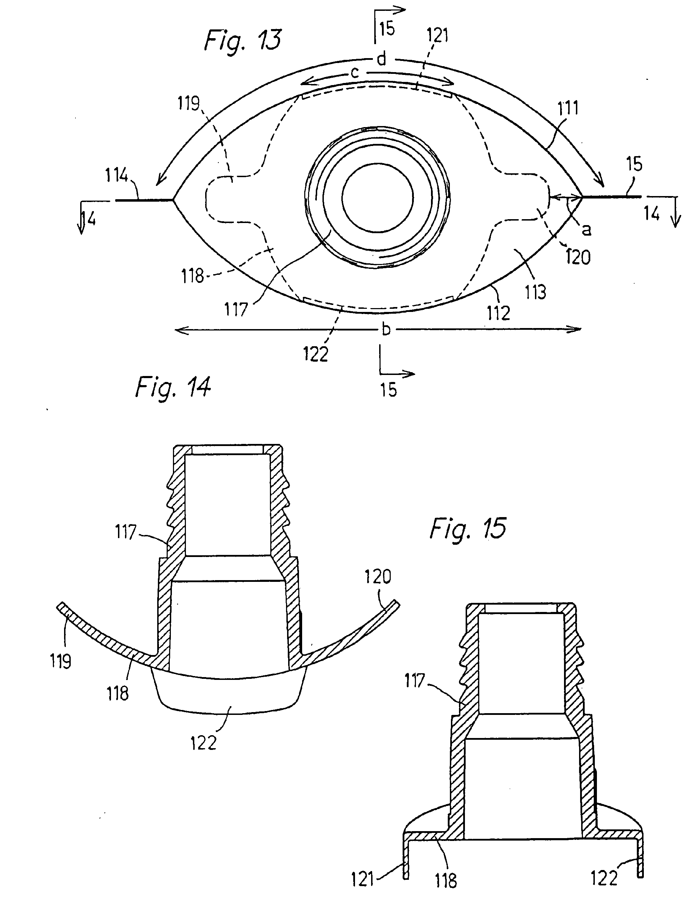

Der Flansch 118 erstreckt sich, vom Auslassstutzen 117 ausgehend, bis zu je einem mittleren Bereich jeder Seitenwand 111, 112 nach aussen. Dieser mittlere Bereich jeder Seitenwand hat, wie in Fig. 13 dargestellt, eine Breite c, die wenigstens gleich 20%, vorzugsweise wenigstens 30%, der ganzen Breite d jeder Seitenwand 111, 112 zwischen den Seitenrandabschnitten 114 und 115 ist. Der sich längs der Stirnwand 113 bis zu den oberen Enden der Seitenwände 111 und 112 nach aussen erstreckende Flansch 118 dient dazu, die Stirnwand 113 zu versteifen und dadurch die Gefahr zu verringern, dass die Tube umkippen könnte, wenn sie mit einer auf den Auslassstutzen 117 aufgeschraubten Verschlusskappe (nicht dargestellt) nach unten gerichtet aufgestellt wird.

Zu dem gleichen Zweck weist der Flansch 118 zwei an der Stirnwand 113 befestigte Stützen 119 und 120 auf, die sich in Richtung zu den beiden Seitenrandabschnitten 114 und 115 der Seitenwände 111, 112 hin erstrecken. Die beiden Stützen 119 und 120 erstrecken sich vorzugsweise bis auf einen Abstand a (Fig. 13) zu den Seitenrandabschnitten 114 bzw. 115 hin, der höchstens gleich 20%, vorzugsweise höchstens 10%, des bei der Stirnwand 113 gemessenen Abstandes b zwischen den Seitenrandabschnitten ist.

Der Flansch 118 kann aber auch bei den Rändern der Stirnwand 113 zwei abgewinkelte, parallel zu den Seitenwänden 111 und 112 verlaufende Laschen 121 und 122 aufweisen. Die Laschen 121 und 122 versteifen die der Stirnwand 113 benachbarten mittleren Bereiche der Seitenwände 111 und 112. Gleichzeitig schützen sie das Folienmaterial gegen Verdrehung und/oder Verletzung, wenn die Tube für das Abschrauben einer Verschlusskappe (nicht dargestellt) vom Auslassstutzen 117 mit einer Hand in den genannten Bereichen der Seitenwände gehalten wird. Anderseits sind die Laschen 121 und 122, um das vollständige Ausdrücken der Tube nicht zu behindern, vorzugsweise flexibler als die übrigen Teile des Flansches 118. Beispielsweise haben die Laschen 121, 122 eine kleinere Wandstärke als die übrigen Teile des Flansches 118.

## Patentansprüche

1. Beuteltube, mit einem Folienmaterial, das eine Stirnwand (3; 113) und zwei Seitenwände (5, 6; 111, 112) der Tube bildet, wobei die Seitenwände längs zweier Seitenrandabschnitten (5a, 6a; 114, 115) miteinander verbunden sind, und mit einem Schulterstück, das einen verschliessbaren Auslassstutzen (14; 117) und einen an der Stirnwand (3; 113) befestigten Flansch (18; 118) aufweist, welcher wie die Stirnwand (3; 113) geformt ist, **dadurch gekennzeichnet, dass** der Flansch (18; 118) oder der Auslassstutzen (14; 117) sich entlang der Stirnwand (3; 113) bis zu einem mittleren Bereich jeder Seitenwand (5, 6; 111, 112) nach aussen hin erstreckt und jeweils wenigstens zwei abstehende, an der Seitenwand des Folienmaterials anliegende Laschen (10; 121, 122) zur Verstärkung des Folienmaterials aufweist.

2. Beuteltube nach Anspruch 1, **dadurch gekennzeichnet, dass** der genannte mittlere Bereich jeder Seitenwand (5, 6; 111, 112) eine Breite (c) hat, die wenigstens gleich 20% der ganzen Breite (d) der Seitenwand zwischen den Seitenrandabschnitten (5a, 6a; 114, 115) ist.

3. Beuteltube nach Anspruch 2, **dadurch gekennzeichnet, dass** die Laschen (10; 121, 122) an den mittleren Bereichen der Seitenwände (5, 6; 111, 112) anliegen.

4. Beuteltube nach Anspruch 3, **dadurch gekennzeichnet, dass** die an den Seitenwänden (5, 6; 111, 112) anliegenden Laschen (10; 121, 122) flexibler sind als die übrigen Teile des Flansches (18; 118).

5. Beuteltube nach Anspruch 1, **dadurch gekennzeichnet, dass** sich der Flansch (18; 118) bis auf einen Abstand (a) zu den Seitenrandabschnitten (5a, 6a; 114, 115) erstreckt, der höchstens gleich 20%, vorzugsweise höchstens 10%, des bei der Stirnwand (3; 113) gemessenen Abstandes (b) zwischen den Seitenrandabschnitten (5a, 6a; 114, 115) ist.

6. Beuteltube gemäss einem der Ansprüche 1 bis 5, **dadurch gekennzeichnet, dass** auf der Stirnwand (3) ein Verschlusskörper (4) angeordnet ist, welcher den Auslassstutzen (14) aufweist und der mit diesem Auslassstutzen (14) auf einem das Werkstück stirnseitig durchdringenden Befestigungsstutzen (17) sitzt.

7. Beuteltube nach Anspruch 6, **dadurch gekennzeichnet, dass** die Ecken des stirnseitigen Teiles eines Schlauchkörpers (2) gefaltet sind und dass jede Ecke um 5° bis 90° umgelegt ist.

8. Beuteltube nach einem der Ansprüche 6 oder 7, **dadurch gekennzeichnet, dass** der Verschlusskörper (4) zum Schutz der Stirnkanten (9a) mit die Seitenwände (5, 6) überdeckenden Schutzlaschen (10) versehen ist.

9. Beuteltube nach einem der Ansprüche 1 bis 8, **dadurch gekennzeichnet, dass** der Flansch (118) zwei Stützen (119, 120) aufweist, die sich entlang der Stirnwand (113) in Richtung zu den beiden Seitenrandabschnitten (114, 115) der Seitenwände (111, 112) hin erstrecken.

10. Beuteltube, mit einem Folienmaterial, das eine Stirnwand (113) und zwei Seitenwände (111, 112) der Tube bildet, wobei die Seitenwände längs zwei Seitenrandabschnitten (114, 115) miteinander verbunden sind, und mit einem Schulterstück, das einen verschliessbaren Auslassstutzen (117) und einen an der Stirnwand (113) befestigten, wie die Stirnwand gekrümmten Flansch (118) aufweist, **dadurch gekennzeichnet, dass** der Flansch (118) sich vom Auslassstutzen (117) ausgehend entlang der Stirnwand (113) bis zu einem mittleren Bereich jeder Seitenwand (111, 112) nach aussen erstreckt und entlang der Stirnwand (113) in Richtung zu den beiden Seitenrandabschnitten (114, 115) der Seitenwände (111, 112) hin erstreckt.

11. Verfahren zur Herstellung eines deformierbaren und zur Aufnahme eines pastösen Produktes dienenden Behälters (1) mit zwei Wänden (5, 6) und einer einen Auslass aufweisenden Stirnseite (3), wobei
- ein Folien- oder Verbundstoffwerkstück entlang einer Achse gefaltet wird,
- die nach dem Falten aneinander anliegenden Werkstückabschnitte randseitig miteinander verbunden werden,
- beim Auffalten des so hergestellten Schlauchkörpers (2) aus dem den Falz aufweisenden Querabschnitt zwei Stirnkanten (9a) gebildet werden, die ihrerseits einen flächenartigen, die Stirnseite (3) bildenden Mittelabschnitt (9) begrenzen, und
- auf der Stirnseite (3) ein Verschlusskörper (4) eingesetzt, das pastöse Produkt durch eine der Stirnseite (3) gegenüberliegende Öffnung in den aufgefalteten Schlauchkörper (2) eingefüllt und die genannte Öffnung nach dem Einfüllen des Produktes verschlossen wird,
**dadurch gekennzeichnet, dass** aus dem den Falz aufweisenden und die Stirnseite (3) zu bilden bestimmten Querabschnitt des gefalteten Werkstücks eine Auslassöffnung (12) ausgestanzt und die beiden Werkstückabschnitte entlang zweier einander zugekehrten Seitenränder (5a, 6a) miteinander verschweisst werden, dass im aufgefalteten Zustand des so gebildeten Schlauchkörpers (2) durch die der Stirnseite (3) gegenüberliegende Öffnung ein Befestigungsstutzen (17) in den Schlauchkörper (3) eingeführt, mit dem Stutzenhals (19) durch die Auslassöffnung (12) hindurchgestossen und an der Innenseite des Mittelabschnittes (9) befestigt wird, dass dann ein Verschlusskörper (4) bestehend aus einem Auslassstutzen (14) und einem Verschlussdeckel (15) so auf den aus dem Schlauchkörper (2) herausragenden Hals (19) des Befestigungsstutzen (17) aufgesetzt wird, dass der Mittelabschnitt (9) zwischen dem Befestigungsstutzen (17) und dem Auslassstutzen (14) eingespannt wird.

12. Behälter hergestellt nach dem Verfahren gemäss Anspruch 11, **gekennzeichnet durch** zwei zusammendrückbare Wände (5, 6) und einer einen Auslass aufweisenden Stirnseite (3), wobei die beiden Wände (5, 6) an zwei einander gegenüberliegenden Seitenränder (5a, 6a) und einem der Stirnseite (3) gegenüberliegenden Querrand (5b) dicht miteinander verbunden sind und aus einem einstückigen Werkstück bestehen und wobei auf der ebenfalls **durch** das genannte Werkstück gebildeten Stirnseite (3) ein Verschlusskörper (4) angeordnet ist, der auf einem das Werkstück stirnseitig durchdringenden Befestigungs-Stutzen (17) sitzt.

13. Behälter nach Anspruch 12, **dadurch gekennzeichnet, dass** die Ecken des stirnseitigen Teiles des Schlauchkörpers (2) gefaltet sind und dass jede Ecke um 5° bis 90° umgelegt ist.

14. Behälter nach Anspruch 12 oder 13, **dadurch gekennzeichnet, dass** der Verschlusskörper (4) zum Schutz der Stirnkanten (9a) mit die Wände (5, 6) überdeckenden Schutzlaschen (10) versehen ist.
